Europäisches Patentamt

European Patent Office

Office européen des brevets

(11) Publication number: **0 292 164**
**A2**

## EUROPEAN PATENT APPLICATION

(21) Application number: 88304157.6

(22) Date of filing: 09.05.88

(51) Int. Cl.4: **F16L 19/02 , F16B 39/32**

(30) Priority: 07.05.87 GB 8710807

(43) Date of publication of application:
**23.11.88 Bulletin 88/47**

(84) Designated Contracting States:
**AT BE CH DE ES FR GB IT LI NL SE**

(71) Applicant: **STANDARD HOSE LIMITED**
**Owler Ings Mill Owler Ings Road**
**Brighouse West Yorkshire HD6 1EJ(GB)**

(72) Inventor: **Anderson, Roderick Seaton**
**Birk House Farm Bailiffe Bridge**
**Brighouse West Yorkshire HD6 4JL(GB)**

(74) Representative: **Wharton, Peter Robert et al**
**Urquhart-Dykes & Lord Alliance House 29-31**
**Kirkgate**
**Bradford West Yorkshire, BD1 1QB(GB)**

(54) **Hose pipe.**

(57) A joint 10 comprises a rotatable nut 12 having an internal screw thread 14 loosely fitted and held captive on an internal flange 18 having a sealing face 22 and adapted to mate with a part 26 having an external screw thread 28 and a complementary sealing face 30. The bearing surface between the flange 18 and the nut 12 is reduced in friction, for example by means of the insertion of a washer 32 of low friction material such as polytetrafluoroethylene between the surfaces concerned. This enables the nut 12 to be tightened without danger of inducing torque in to the hose connected to the joint.

EP 0 292 164 A2

## HOSE PIPE

This invention relates to hose pipes and in particular relates to an end fitting or a joint for a hose pipe.

It is common practice to connect flexible hoses or rigid pipes together, or to other mating parts, by fittings or joints. A particular form of joint is known as a 'female union joint' and comprises a rotatable nut which has an internal screw thread loosely fitted and held captive on an internal flange which has a sealing face. The complementary mating part of the joint has an external screw thread with a complementary sealing face. When the nut is rotated about the flange and screwed on to the male screw thread of the mating part the two sealing faces are drawn together to form a pressure type seal, often with a gasket positioned between the sealing surfaces to provide a more efficient seal. In such a joint, in the final stages of tightening, to compress the sealing faces together (with or without the gasket), the nut will be exerting pressure on and rotating against the bearing surface of the flange. This creates a frictional drag between the nut and the flange which tends to rotate the flange with the nut. Opposing this rotation of the flange is the frictional force of the sealing face against the complementary sealing face of the male mating portion which tends to hold the flange still.

Should rotation occur during the final tightening of the nut it is disadvantageous since, if the hose or pipe attached to the flange and the mating parts is fixed at its other end, which is usually the case, then twist or torque will be imparted to the hose or pipe. Such torque becomes trapped or 'locked in' when the joint is completely tightened. It is known that the stresses induced by even a small degree of torque can be very damaging to a hose or pipe and can cause premature fracture of components. In order to prevent this happening with a conventional joint, the flange or pipe behind the nut can be held, for example with a spanner, while the joint is finally tightened. However this procedure is awkward and uncertain. Another way in which the induction of torque can be avoided, whether it is induced by joint tightening or by relative movement of the component after the joint has been made, is to connect a 'swivel joint' between the end fittings of the part and its mating component. A swivel joint is a unit with two connection ports, which are free to swivel or rotate relative to each other while maintaining a tight seal within the joint. Such swivel joints increase the expense and complication of joining a pipe and in practice are not normally used to relieve torque induced by tightening of female union joints but only in situations where rotation of the hose or pipe is required after the joint has been made.

In the particular case of a female union joint where the sealing faces and/or gaskets are made of a material with a very low coefficient of friction , for example polytetrafluoroethylene, the problem of tightening the joint without inducing torque is particularly acute, because the force on the sealing face tending to oppose rotation is very much reduced.

The invention seeks to provide a form of joint in which the above disadvantages are reduced or eliminated.

According to the present invention there is provided a joint which comprises a rotatable nut having an internal screw thread loosely fitted and held captive on an internal flange having a sealing face, and adapted to mate with a part having an external screw thread and a complementary sealing face, characterised in that the bearing surface between the flange and the nut is reduced in friction.

Preferably the reduction in friction is carried out by the insertion of a washer of low friction material between the surfaces concerned, but equally one or both surfaces could have a coating of low friction material or a bearing, such as a ball bearing, inserted between them. Any material may be employed having sufficiently low friction characteristics coupled with sufficient durability to give a useful wear life. In particular filled or unfilled fluorinated hydrocarbon plastics materials, for example polytetrafluoroethylene (PTFE), have been found to be especially useful. The low friction material may, for example, be in the form of a thrust washer located between the surface of the flange opposite the sealing surface and the captive flange of the nut.

The reduced friction between the bearing surfaces in the joint of the invention allows the joint to be tightened with very much reduced danger of introducing torque in pipe or hose. However the reduction of friction between the bearing surfaces may, in some circumstances, mean that the resistance to untightening of the nut is reduced also. Also, it is preferred to employ an additional system whereby the nut is locked in place relative to the remainder of the joint when the latter has been sufficiently tightened. It is particularly preferred to use the system for locking the nut described in our co-pending application No. 8710809 filed herewith (reference P 41442 EP).

It is unexpectedly found that the joint of the invention, when used with a nut locking system, has the property of acting as a swivel joint in itself without any further extra components being required between the fittings. The joint is capable of smooth and easy rotation even while under internal pressure, without leaking, and with the nut prevented from being accidentally unscrewed by the rotation as a result of the provision of the nut locking system.

The invention will be described further, by way of example, with reference to the accompanying drawings, in which:

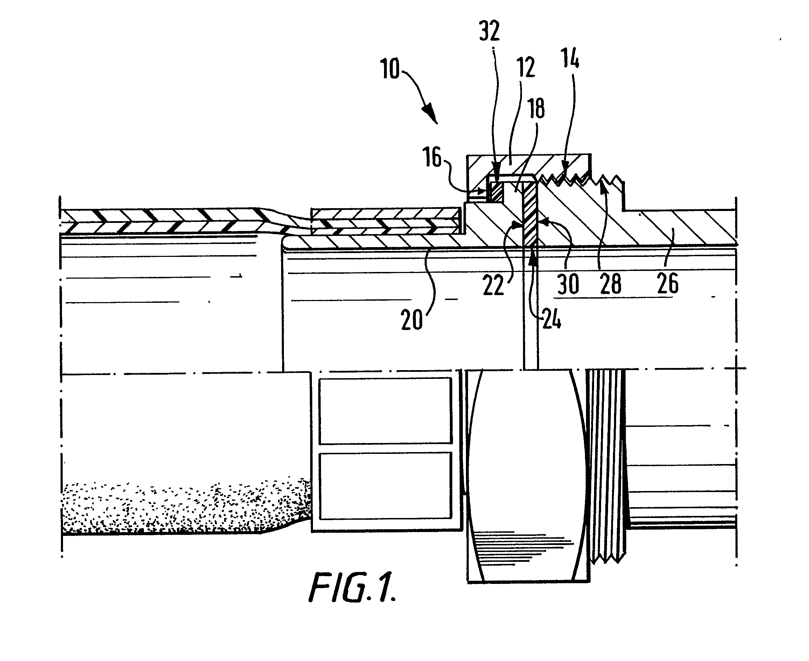

Figure 1 is a side view, partly in section, of a joint in accordance with the invention; and

Figure 2 is a similar view to figure 1 incorporating a nut locking system.

Referring to the drawings, a female union joint generally designated 10 comprises a rotatable nut 12 having an internal screw thread 14 and an inwardly directed flange 16 with which it may be held captive against a flange 18 of the internal portion 20 of the fitting. The flange 18 has a sealing face 22 on which may be positioned a gasket 24.

The other part of the joint 10 is provided by a male fitting 26 with an externally threaded portion 28 and a complementary sealing surface 30.

In use, the joint 10 is made by bringing the male and female portions 20, 26 together and positioning the gasket 24 between the complementary sealing surfaces 22, 30 thereof. The nut 12 is engaged on the thread 28 and rotated so as to bring the surfaces 22 and 30 into sealing contact with the gasket 24. A conventional female union joint operates in this manner.

The joint 10 of the invention additionally includes a thrust washer 32 of a low friction material, especially polytetrafluoroethylene, positioned between the forward facing surface of the internally directed flange 16 of the nut and the rearwardly facing surface of the flange 18. These two surfaces form the bearing surfaces which the nut 12 engages as it is finally tightened on to the male fitting 26 to draw the joint together. Provision of the washer 32 ensures that the nut 12 can be turned to the requisite tightness without inducing torque into the hose or pipe connected to the part 20.

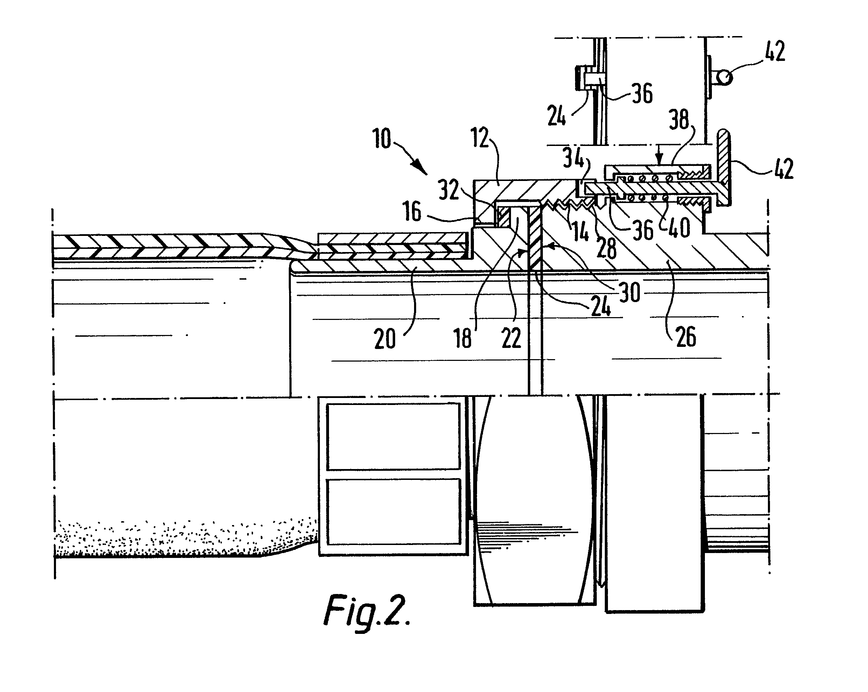

Referring now to figure 2 and using like numerals for like parts, it can be seen that the nut 12 is provided with a slot 34 which co-acts with a spring loaded rod 36 mounted on the male portion 26. The rod 36 is mounted in a housing 38 and is biassed to the left (as viewed in figure 2) by means of a spring 40. A handle or trigger 42 is provided whereby the rod can manually be moved to the right in order to release it from the slot 34.

In use, the nut 12 is tightened as described above but during the final stage of the tightening process the slot 34 comes into register with the spring loaded rod 36 which then snaps into place in the slot 34 holding the nut against further rotation, either over-tightening or becoming loose in service. To undo the nut 12, the operator must manually move the trigger or handle 42 to release the rod 36 from the slot 34 after which the nut 12 can be untightened in the normal way. This locking mechanism forms the subject of our co-pending application (reference P 41442 EP) filed simultaneously herewith.

The joint of the invention is particularly useful when the gasket 24 is of a low friction material such as polytetrafluoroethylene which will often be the case where the hose is being used to transport corrosive fluids or fluids intended for human consumption. It has been found that the joint so formed, particularly when locked by means of the device described with relation to figure 2, has the properties of a swivel joint and allows swivelling in service even under full internal pressure of fluid without leaking. Thus even if any torque is induced during the tightening up of the joint this is immediately relieved.

While the internally threaded member 12 has been described as a 'nut' it will be appreciated that it need not necessariy be driven with a spanner or wrench. Indeed, in the preferred form, the nut 12 is provided with opposed bars or tommy rods with which it can be tightened and released manually without the need of a tool.

## Claims

1. A joint which comprises a rotatable nut 12 having an internal screw thread 14 loosely fitted and held captive on an internal flange 18 having a sealing face 22, and adapted to mate with a part 26 having an external screw thread 28 and a complementary sealing face 30, characterised in that the bearing surface between the flange 18 and the nut 12 is reduced in friction.

2. A joint as claimed in claim 1 in which the reduction in friction is carried out by the insertion of a washer 32 of low friction material between these surfaces.

3. A joint as claimed in claim 1 in which the reduxction of friction is effected by the provision of a coating of low friction material on each of the surfaces.

4. A joint as claimed in claim 1 in which the reduction of friction is effected by the provision of a bearing between the surfaces.

5. A joint as claimed in any of claims 1 to 3 in which the low friction material is a fluorinated hydrocarbon plastics material.

6. A joint as claimed in any of claims 1 to 5 additionally employing a nut locking system 34, 36.

7. A joint as claimed in any of claims 1 to 6 in which the nut 12 is provided with opposed bars for manual operation without the need of a tool.

8. A hose pipe and joint assembly in which the joint is as claimed in any of claims 1 to 7.

FIG.1.

0 292 164

Fig.2.